# EUROPÄISCHE PATENTSCHRIFT

(11) **EP 2 521 660 B1**
(45) Veröffentlichungstag und Bekanntmachung des Hinweises auf die Patenterteilung: **11.12.2013**
(21) Anmeldenummer: 10800747.7
(22) Anmeldetag: 23.12.2010
(51) Int. Cl.: B60H 1/34

(54) **KOMFORT-LUFTAUSSTRÖMERDÜSE**
COMFORT-AIR NOZZLE
BUSE D'AERATION DE CONFORT

(30) Priorität: 04.01.2010 DE 102010004021
(43) Veröffentlichungstag der Anmeldung: 14.11.2012
(73) Patentinhaber: Behr GmbH & Co. KG, 70469 Stuttgart (DE)
(72) Erfinder: WOLF, Walter, 71570 Oppenweiler-Zell (DE); BENAMIRA, Salah, 70499 Stuttgart (DE); D'ANGELO, Marco, 70469 Stuttgart (DE); TIDELSKI, Axel, 70771 Leinfelden-Echterdingen (DE); ZELLER, Kuno, 70469 Stuttgart (DE); FRITSCHE, Uwe, 71686 Remseck am Neckar (DE); WANKE, Holger, 74385 Pleidelsheim (DE)
(74) Vertreter: Grauel, Andreas
(86) Internationale Anmeldenummer: PCT/EP2010/070643
(87) Internationale Veröffentlichungsnummer: WO 2011/080215

(56) Entgegenhaltungen:
- EP-A1- 1 785 298
- DE-A1- 3 736 448
- DE-A1-102007 013 868

## Beschreibung

Die Erfindung betrifft eine Luftausströmvorrichtung zum Ausströmen eines Luftstroms, insbesondere in einen Fahrzeuginnenraum hinein, mit zumindest einer, zumindest hinsichtlich ihrer Luftausströmcharakteristik verstellbaren Luftleiteinrichtung, welche in zumindest einem ersten Luftausströmbereich der Luftausströmvorrichtung angeordnet ist.

Bei der Belüftung von geschlossenen Innenräumen, wie beispielsweise von Kraftfahrzeugen, wird ganz allgemein an einer oder an mehreren Stellen Luft angesaugt, aufgearbeitet und in den zu belüftenden Innenraum abgegeben. Die Luftansaugung kann dabei sowohl von der Umgebung her und/oder zumindest teillweise und/oder zumindest zeitweise auch vom zu belüftenden Innenraum selbst (sogenannter Umluftbetrieb) her erfolgen. Die derart angesaugte Luft wird beispielsweise durch Erwärmen (Heizungsbetrieb), Abkühlen (Klimaanlagenbetrieb) und/oder Filtern (Entfernen von Schmutzpartikeln, Pollen und dergleichen) aufgearbeitet.

Insbesondere bei der Belüftung von Kraftfahrzeuginnenräumen werden in aller Regel mehrere Orte vorgesehen, an denen die aufgearbeitete Luft in den Kraftfahrzeuginnenraum hinein strömt. Beispielsweise werden heutzutage üblicherweise Luftzuführöffnungen vorgesehen, welche in Richtung der Windschutzscheibe, in Richtung der Seitenscheiben und/oder in Richtung des Fahrer-/Beifahrerfußraums hin gerichtet sind, sowie Luftzuführöffnungen, die im Bereich des Armaturenbretts vorgesehen sind und in Richtung des Fahrers/Beifahrers zielen. In Abhängigkeit von der Position der Luftabgabeöffnung sind dabei unterschiedliche Luflausströmcharakteristika erwünscht. So soll beispielsweise die Luftströmung in den Fußraum des Fahrers/Beifahrers hinein möglichst diffus erfolgen, um unerwünschte Luftzüge zu vermeiden. Bei einer Luftausströmung in der Richtung Windschutzscheibe bzw. Seitenscheiben ist dagegen in der Regel ein gerichteter Luftstrom sinnvoll, beispielsweise um die betreffende Scheibe möglichst schnell abtauen zu können.

Bei Luftabgabeöffnungen, welche im Armaturenbrelt positioniert sind, stellt sich die Aufgabe vielschichtiger dar. So ist es in Abhängigkeit der Umgebungsbedingunsen und/oder in Abhängigkeit der persönlichen Präferenzen des Fahrers bzw. Beifahrers erwünscht, zu bestimmten Zeiten eine diffuse Luftausetrömung, zu anderen Zeiten jedoch eine gerichtete Luftausströmung (sogenannter Spot-Belüftungsbetrieb) zur Verfügung zu stellen.

Um derartigen hohen Komfortansprüchen zu genügen ist es grundsätzlich möglich, zwei unterschiedliche Arten von Luftausströmerdüsen vorzusehen, nämlich einerseits Spot-Luftausströmerdüsen, andererseits Diffus-Luftausströmerdüsen. Bei einer derartigen Herangehensweise ist jedoch der dafür erforderliche Bauraum problematisch.

Weiterhin wurde beispielsweise in der deutschen Patentanmeldung DE 10 2007 013 868 A1 ein Luftausströmer vorgeschlagen, welcher sowohl eine gerichtete Luftströmung, als auch eine diffuse Luftströmung (Drallströmung) abgeben kann. Die Umstellung zwischen gerichteter Luhausströmung (Spot-Betrieb) und diffuser Luftabgabe erfolgt durch Verstellung eines Bedienelements. Aufgrund des Aufbaus der in DE 10 2007 013 868 A1 vorgeschlagenen Luftausströmerdüse weist diese jedoch zwangsläufig eine kreisrunde Außenkontur auf. Eine derartige Außenkontur ist zwar vorteilhaft, wenn es darum geht, die Luftausströmrichtung in unterschiedlichste Richtungen lenken zu können. Sie erweist sich jedoch als problematisch, wenn aufgrund der konkreten Einbausituation im Kraftfahrzeug an sich ein nicht-kreisrunder Bauraum zur Verfügung steht. Dies stellt jedoch insbesondere im Kraftfahrzeugbereich ein Problem dar, da hier einerseits Bauraum, insbesondere im Bereich des Armaturenbretts, überaus knapp und "kostbar" ist, und andererseits der für belüftungstechnische Einrichtungen zur Verfügung stehende Bauraum, speziell im Bereich des Armaturenbretts, üblicherweise eine nichtkreisrunde Querschnittsform aufweist. Dies führt in aller Regel dazu, dass Bauraum, der eigentlich für die Abgabe von Luft zur Verfügung stünde, nicht, bzw. nicht optimal für die Freisetzung von Luft genutzt wird. Dadurch sinkt die Luftabgabeleistung der betreffenden Luftauslassdüse. Um dies zu kompensieren ist es möglich, die Gebläseleistung zu erhöhen, was jedoch zu erhöhten Betriebsgeräuschen sowie zu einem erhöhten Verbrauch an Energie zum Antrieb der unterschiedlichen Gebläsevorrichtungen führen kann. Dies ist naturgemäß von Nachteil,

Ein Vorschlag, zum im Falle einer nicht-kreisrunden Einbausituation eine möglichst effiziente Luftausströmerdüse zu realisieren wurde in der deutschen Offenlegungsschrift DE 10 2004 038 016 A1 gemacht. Dort wird zur verbesserten Ausnutzung eines im Wesentlichen rechteckigen Einbauraums vorgeschlagen, eine Luflausströmerdüse mit zwei, jeweils nebeneinander angeordneten Luftausströmerteilen auszubilden. Salopp formuliert handelt es sich so um zwei nebeneinander angeordnete, im Wesentlichen voneinander unabhängige einzelne Luftausströmerdüsen. Problematisch sind beim dortigen Aufbau jedoch insbesondere die erhöhten Fertigungskosten, die für die Fertigung der beiden, jeweils relativ komplex ausgebildeten Luftausströmerdüsen entstehen. Darüber hinaus wird auch bei dern dort vorgeschlagenen Aufbau - wenn auch in einem geringeren Ausmaß - Bauraum verschenkt. Um die Kosten für die in dieser Druckschrift vorgeschlagene Luftausströmerdüse zu verringern, ist diese im Wesentlichen ohne bewegliche Elemente ausgebaut.

Eine weitere bekannte Luftausströmvorichtung ist aus der gattungsgemäßen DE 37 36 448 offenbart.

Die Aufgabe der Erfindung besteht somit darin, eine gegenüber dem Stand der Technik verbesserte Luftausströmvorrichtung vorzuschlagen.

Eine Luftausströmvorrichtung mit den im unabhängigen Patentanspruch aufgeführten Merkmalen löst diese Aufgabe.

Dazu wird vorgeschlagen, eine Luftausströmvorrichtung, die zum Ausströmen eines Luftstroms, insbesondere in einen Fahrzeuginnenraum hinein, dient, und die zumindest eine, zumindest hinsichtlich ihrer Luftausströmcharakteristik verstellbare Luftleiteinrichtung aufweist, welche in zumindest einem ersten Luftdruchströmbereich der Luftausströmvorrichtung angeordnet ist, derart auszubilden, dass diese zumindest eine zweite, zumindest hinsichtlich ihrer Luftausströmcharakteristik verstellbare Luftleiteinrichtung, welche in zumindest einem zweiten Luftdurchströmbereich der Luftausströmvorrichtung angeordnet ist, aufweist. Unter einer Luftausströmcharakteristik ist insbesondere die Art der Luftausströmung zu verstehen, also beispielsweise, ob diese (teilweise) als gerichteter Luftstrahl, (teilweise) als diffuser Luftstrahl, als Kombination aus einem diffusen und einem gerichteten Luftstrahl (beispielsweise in einer Art koaxialer Anordnung) oder aus einer Zwischenstellung zwischen gerichtetem und diffusem Luftstrahl austritt. Die Luftdurchströmbereiche der Luftausströmvorrichtung können sowohl einzeln als auch in Kombination eine im Wesentlichen beliebige Form aufweisen. Auch die relative Anordnung der Luftdurchströmberelche zueinander kann grundsätzlich in beliebiger Weise, wie beispielsweise nebeneinander, übereinander und dergleichen erfolgen Möglich ist es jedoch insbesondere auch, dass diese koaxial zueinander angeordnet weiden, also dass beispielsweise der erste Luftdurchströmbereich im Inneren des zweiten Luftdurchströmbereichs (oder umgedreht) liegt. Die Anordnung des ersten Luftdurchströmbereichs innerhalb des zweiten Luftdurchströmbereichs muss dabei nicht notwendigerweise in der geometnschen Mitte erfolgen, sondern kann auch beispielsweise seitlich versetzt erfolgen. Üblicherweise ist es jedoch von Vorteil, wenn die Anordnung von erstem und zweitem Luftdurchströmbereich in einer Art koaxialen Anordnung erfolgt Zwar ist es grundsätzlich möglich, dass der erste und zweite Luftdurchströmbereich eine (im Wesentlichen) gleichartige Außenform aufweisen. Üblicherweise ist es jedoch - insbesondere im Hinblick auf eine besonders gute Ausnutzung des zur Verfügung stehenden Bauraums - in der Regel besonders vorteilhaft, wenn der erste und der zweite Luftdurchströmbereich eine unterschiedliche Formgebung aufweisen. Insbesondere kann der erste Luftdurchströmbereich eine zumindest im Wesentlichen kreisförmige Formgebung aufweisen, wohingegen der zweite Luftdurchströmbereich (der beispielsweise um aen ersten Luftdurchströmbereich herum liegend angeordnet sein kann) eine polygonartige, viereckige, rechteckige bzw quadratische Form aufweisen kann (gegebenenfalls auch mit abgerundeten Ecken) Selbstverständlich ist es auch möglich, eine Mehrzahl von ersten Luftdurchströmbereichen, eine Mehrzahl von zweiten Luftdurchströmbereichen und/oder einen oder mehrere dritte, vierte usw Luftdurchströmbereiche vorzusehen, wobei das vorab gesagte in analoger Form angewendet werden kann Grundsätzlich ist es möglich, dass die einzelnen Luftleinrichtungen zumindest bereichsweise und/oder zumindest teilweise voneinander unabhängig eingestellt werden können Hierdurch kann gegebenenfalls ein besonders individuelles Einstellen auf unterschiedliche Komfortbedürfnisse realisiert werden Eine einfachere Bedienung und/oder gegebenenfalls auch ein einfacherer Aufbau der Luftausströmvorrichtung kann sich jedoch ergeben, wenn zumindest zwei Luftleiteinrichtungen zumindest bereichsweise und/oder zumindest teilweise gemeinsam miteinander verstellt werden. Beilspielsweise kann durch Betätigung eines einzelnen Bedienknopfs mit dem die Luftausströmcharakteristik verstellt werden kann, die Luftausströmcharakteristik der gesamten Luftausströmvorrichtung geändert werden. In jedem Fall ist es durch das Vorsehen von zumindest zwei Luftleitenrichtungen meist möglich, einen besonders großen Anteil (gegebenen falls auch die gesamte) der die Luftausströmvorrichtung verlassenden Luftströmung hinsichtlich ihrer Luftausströmcharakteristik zu verändern. Darüber hinaus ist es durch das Vorsehen einer Mehrzahl von Luftdurchstrombereichen möglich, die Formgebung der Luftausströmvorrichtung besonders gut an bestehende Bauraumvorgaben anpassen zu können. Dennoch Kann mit der vorgeschlagenen Luftausströmvorrichtung ein überraschend einfacher und kostengünstiger Aufbau der Luftausströmvorrichtung realisiert werden.

Als vorteilhaft erweist es sich, wenn bei der Luftausströmvorrichtung zumindest eine erste Luftleitenrichtung und/oder zumindest eine zweite Luftleiteinrichtung zumindest eine Betriebsstellung mit einer gerichteten Luftausströmcharakteristik und/oder zumindest eine Betriebsstellung mit einer diffusen Luftausströmcharakteristik aufweist, sowie vorzugsweise Betriebsstellungen mit Zwischencharakteristiken einnehmen kann. Die Erfahrung im Kraftfahrzeugbereich hat ergeben, dass ein Teil der Nutzer von Kraftfahrzeugen mit einer moglichst gerichteten Luftströmung im Kopfbereich "angeblasen" werden möchte, ein weiterer Teil der Benutzer von Kraftfahrzeugen mit einer möglichst diffusen Luftströmung "angeblasen" werden möchte, und ein weiterer Teil der Benutzer von Kraftfahrzeugen beispielsweise in Abhängigkeit von unterschiedlichen Umgebungsbedingungen zeitweise mit einer gerichteten, zeitweise jedoch mit einer diffusen Luftströmung "angeblasen" werden möchte. Manche Nutzer von Kraftfahrzeugen bevorzugen jedoch auch (zumindest zeitweise) eine "Mischform" zwischen diesen Extremwerten Diesen unterschiedlichen Vorgaben kann mit der vorgeschlagenen Ausbildungsform der Luftausströmvorrichtung in besonders weitgehender Weise entsprochen werden.

Als vorteilhaft kann es sich weiterhin erweisen, wenn bei der Luftausström-Vorrichtung zumindest eine erste Luftleiteinrichtung und zumindest eine zweite Luftleiteinrichtung zumindest bereichsweise und/oder zumindest teilweise integral miteinander ausgebildet sind. Auf diese Weise kann die Montage der Luftausströmvorrichtung, sowie der Einbau der Luftausströmvorrichtung beispielsweise in einem Kraftfahrzeug in der Regel vereinfacht werden. Auch kann sich der Aufbau der Luftausströmvorrichtung vereinfachen, wodurch beispielsweise eine insgesamt kostengünstigere Bauweise der Luftausströmvorrichtung möglich wird. Durch eine integrale Bauweise kann sich jedoch auch die Betriebssicherheit und Haltbarkeit der Luftausströmvorrichtung erhöhen.

Insbesondere ist es möglich, die Luftausströmvorrichtung derart auszubilden, dass zumindest eine erste Luftleitenrichtung und zumindest eine zweite Luftleiteinrichtung zumindest bereichsweise und/oder zumindest teilweise miteinander gekoppelt sind, und vorzugsweise zumindest teilweise und/oder zumindest bereichsweise miteinander kraftschlüsssig, formschlüssig, verschiebefest, drehfest, einteilig und/oder einstückig ausgebildet sind. Auch hier können sich der Aufbau der Luftausströmvorrichtung vereinfachen, die Herstellungskosten verringern und der Einbau der Luftausströmvorrichtung beispielsweise in einem Kraftfahrzeug vereinfachen. Insbesondere ist es auch möglich, dass der Bedienkomfort der Luftausströmvorrichtung vereinfacht wird, beilspielsweise dadurch, dass mit einem einzelnen Bedienelement mehrere (gegebenenfalls auch alle) Luftleiteinrichtungen gleichzeitig bedient werden können. Insbesondere mit eine einteiligen und/oder einstückigen Aufbau können oftmals die Herstellungskosten verringert werden. Mit einem mehrteiligen Aufbau ist es dagegen oftmals möglich, die einzelnen Teile der Luftausströnvorrichtung (beispielsweise die jeweiligen Luftleiteinrichtungen) jeweils besser an ihre jeweilige, individuelle Aufgabe hin anzupassen.

Moglich ist es insbesondere, die Luftausströmvorrichtung derart auszubilden, das zumindest eine Luftleiteinrichtung, insbesondere zumindest eine erste Luftleiteinrichtung zumindest teilweise und/oder zumindest bereichsweise in einem radikal innen liegenden Luftdurchströmbereich angeordnet ist und/oder zumindest eine Luftleiteinrichtung, insbesondere zumindest eine zweite Luftleiteinrichtung zumindest teilweise und/oder zumindest bereichsweise in einem radial außen liegenden Lurtdurchströmbereich angeordnet ist. Mit einem derartigen "koaxialen" Aufbau der Luftausströmvorrichtung ist es in der Regel besonders einfach, einerseits eine möglichst weitgehende Anpassung der Luftausströmvorrichtung an bestehende Bauraumvorgaben realisieren zu können, andererseits eine möglichst weitgehend verstellbare und an individuelle Benutzerwünsche anpassbare Luftausströmvorrichtung realisieren zur können,

Vorteilhaft ist es insbesondere, wenn bei der Luftausströmvorrichtung zurmindest ein Luftdurchströmbereich zumindest teilweise und/oder zumindest bereichsweise eine zumindest im Wesentlichen runde, kreisrunde, ovalartige, polygonartige, viereckige, rechteckige, quadratische und/oder abgerundete Formgebung aufweist, insbesondere ist es denkbar, dass ein erster Luftdurchströmbereich (insbesondere ein innen liegender Luftdurchströmbereich) eine runde bzw, kreisrunde Formgebung aufweist. Weiterhin ist es inbesondere denkbar, dass zumindest ein zweiter Luftdurchströmbereich (inbesondere ein außen liegender Luftdurchströmbereich) eine im Wesentlichen ovalartige, polygonartige, viereckige, rechteckige und/oder quadratische Formgebung ausweist, die insbesondere auch abgerundete Ecken aufweisen kann. Selbstverständlich ist es auch möglich, dass die Formgebung anderweitig erfolgen kann, um beispielsweise einem besonders unregelmä-ßig geformten, zur Verfügung stehenden Bauraum zu folgen (was speziellaber nicht nur - für einen außen liegenden Luftdurchströmbereich gelten kann).

Besonders vorteilhaft ist es weiterhin, wenn die Luftausströmvorrichtung derart ausgebildet ist, dass bei dieser zumindest eine Luftleiteinrichtung in zumindest einer Betriebsstellung, insbesondere in einer Betriebsstellung, in der eine gerichtete Luftausströmcharakteristik und/oder eine diffuse Luftausströmcharakteristik gegeben ist, zumindest bereichsweise und/oder zumindest teilweise einer Formgebung zumindest eines Luftdurchströmbereichs folgt. Hierdurch kann eine besonders effiziente und wirksame Luftausströmvorrichtung realisiert werden. Unter der "Formgebung" der Luftleiteinrichtung ist dabei insbesondere an eine Außenkontur bzw. Innenkontur der Luftleiteinrichtung zu denken, sodass sich diese quasi mit ihren Kanten an einer Begrenzungswand der Luftausströmvorrichtung "anschmiegen" kann.

Bei der erfindungsgemäßen Bauausführung der Luftausströmvorrichtung weist zumindest eine Luftleiteinrichtung, insbesondere zumindest eine erste Luftleiteinrichtung, zumindest ein Luftleitelement in der Art eines Schaufelrads mit mindestens einer Schaufel auf, wobei jede der Schaufeln aus mindestens zwei axial hintereinander angeordneten Segmenten gebildet ist, welche relativ zueinander angular verstellbar sind. Ein derartiger Aufbau hat sich bereits in der Praxis gut bewährt, und ist darüber hinaus relativ einfach und kostengünstig realisierbar.

Bei der erfindungsgemäßen Luftaussträmvorrichfung weist zumindest eine Lüftleiteirichtung, insbesondere zumindest eine zweite Luftleiteinrichtcing, zumindest ein Luftleitelement in der Art zumindest eines sich nach außen erstreckenden Strahlenkranzes mit mindestens einer strahtenartig nach außen gerichteten Schaufel auf, wobei jede der Schaufeln aus mindestens zwei axial hintereinander angeordneten Segmenten gebildet ist, welche relativ zueinander angular verstellbar sind, Diese Bauform stellt in einer gewissen Weise eine Ausweitung, Verallgemeinerung bzw, Abwandlung des vorab genannten Bauprinzips dar. Von daher ist es auch in diesem Zusammenhang möglich, dass sich eine relativ einfache und kostenguinstige, in der Praxis haltbare und dauerhafte Luftausströmvorrichtung realisieren lässt.

Insbesondere ist es möglich, wenn bei der Luftausströmvorrichtung zumindest eine schaufelradartig angeordnete Schaufel sowie zumindest eine strahlenkranzartig angeordnete Schaufel in radialer Richtung zumindest teilweise und/oder zumindest bereichsweise zumindest im Wesentlichen miteinander fluchten und/oder in radialer Richtung zumindest teilweise und/oder zumindest befeichsweise zumindest im Wesentlichen versetzt zueinander angeordnet sind. Insbesondere bei einer in radialer Richtung gesehen fluchtenden Anordnung der Schaufeln können mechanisch besonders belastbare Baulkeite realisiert werden, was schlussendlich auch zu einer besonders stabilen Luftausströmvorrichtung fuhren kann. Bei einer in radialer Richtung gesehen zueinander versetzten Anordnung von zumindest zwei Schaufeln ist es möglich, dass die jeweiligen Schaufeln besonders gut an spezielle Bauraumvorgaben angepasst werden können, was sich als vorteilhaft erweisen kann, In beiden Fällen können sich darüber hinaus auch Geräuschminderungseigenschaften durch Verhinderung von Resonanzen bzw. durch Engtstehung von destruktiven Interferenzen ergeben.

Vorteilhaft kann es sein, wenn bei der Luftausströmvorrichtung zumindest zwei Schaufelsegmente zumindest einer Schaufel, insbesondere zumindest einer schaufelradartig angeordneten Schaufel zumindest bereichsweise und/oder zumindest teilweise eine zumindest im Wesentlichen gleichartige Formgebung aufweisen. Mit einem derartigen Aufbau lässt sich oftmals eine besonders effektivere Beeinflussung der Luftströmung realisieren, so dass es insbesondere möglich ist, eine besonders weitgehend diffuse Luftströmung zu realisieren.

Ebenso kann es sich bei der Lüftausströmvorrichtung als vorteilhaft erwelsen, wenn bei dieser zumindest zwei Schaufelsegmente zumindest einer Schaufel insbesondere zumindest einer strahlenkranzartig angeordneten Schaufeln zumindest teilweise und/oder zumindest bereichsweise eine zurmindest im Wesentlichen unterschiedliche Formgebung aufweisen. insbesondere ist es bei einer derartigen Bauausrührung möglich, dass die Schaufeln, speziell hinsichtlich ihrer Außenkonturen, besonders gut an den zur Verfügung stehenden Bauraum, bzw. an Begrenzungswände der Luftausetrömvorrichtung angepasst werden können, Auch dies kann sich als vorteilhaft erweisen,

Vorteilhaft ist es darüber hinaus, wenn bei der Luftausstromvorrichtung zumindest eine Luftleiteinrichtung, insbesondere zumindest eine erste Luftleiteinrichtung, beweglich angeordnet ist und/oder zumindest eine Luftleiteinrichtung, insbesondere zumindest eine zweite Luftleiteinrichtung, starr angeordnet ist. Unter einer beweglich angeordneten Luftleiteinrichtung ist insbesondere eine Luftausatrömerduse zu verstehen, welche derart um eine bzw. zwei Achsen gedreht werden kann, dass der in den Innenraum augegebene Luftstrahl in unterschiedliche Richtungen freigegeben werden kann. Mit einer derartigen bewegliche Anordnung kann die Luftausströmvorrichtung somit besonders gut auf unterschiedliche Komfortbedürfnisse sowie unterschiedlich große Kraftfshrzeuginsassen angepasst werden. Bei einer starren Anordnung zumindest einer Luftleiteinrichtung (also derart, dass ublicherweise die Richtung des freigegebene Luftstrahls nicht verändert werden kann) ist es jedoch oftmals möglich, den zur Verfügung stehenden Bauraum "bis auf den Rand" ausnutzen zu können, was insbesondere bei kantigen und/oder besonders ungewöhnlich geformten, zur Verfügung stehenden Bauräumen von Vorteil sein kann.

Vorteilhaft ist es weiterhin, wenn die Luftausströmvorrichtung zumindest eine Luftdurchtrittsveränderungsvorrichtung, insbesondere zumindest eine Luftabsperrvorrichtung, aufweist. Unter einer Luftdurchtrittsveränderungsvorrichtung ist dabei insbesondere eine Vorrichtung zu verstehen, mit der die durch die Luftausströmvorrichtung hindurch strömende Luftmenge verändert werden kann (bei gleich bleibenden Randbedingungen). Dadurch kann eine nochmalige, in der Regel überaus erwünschte, Einstellmöglichkeit der Luftausströmvorrichtung realisiert werden. Insbesondere kann die Luftdurchtrittsveränderungsvorrichtung so ausgebildet sein, dass diese einen Regelungsbereich überstreicht, der bis hin zu einer vollständigen Luftabsperrung führen kann.

Weiterhin ist es von Vorteil, wenn bei der Luftausströmvorrichtung zumindest eine Luftdurchtrittsveränderungsvorrichtung und zumindest eine Luftleiteinrichtung zumindest teilweise und/oder zumindest bereichsweise über zumindest ein gemeinsames Bedienelement verstellt werden können, Auf diese Weise kann eine besonders komfortable Verstellbarkeit der Luftausströmvorrichtung realisiert werden. Besonders vorteilhaft ist es oftmals, wenn ein besonders großer Anteil der Luftleiteinrichtungen (gegebenenfalls auch alle) mit Hilfe eines gemeinsamen Bedienelements verstellt werden können, Auch hierdurch kann sich ein besonders hoher Bedienkomfort ergeben.

Im Folgenden wird die Erfindung anhand vorteilhafter Ausführungsbeispiele und unter Bezugnahme auf die beigefügte Zeichnung näher erläutert Es zeigen:
- Fit. 1:: eine Komfort-Luftausströmerdüse in zwei unterschiedlichen Störungen, jeweils in schematischer Draufsicht
- Fig. 2:: die in Fig. 1 dargestellte Komfort-Luftausströmerdüse in schematischer, perspektivischer Ansicht;
- Fig. 3:: der für die in den Fig. 1 und 2 gezeigte Komfort-Luftausströmerdüse verwendete Satz von Luftbeainflussungsscheiben in schematischer, perspektivischer Ansicht;
- Fig, 4:: der in Fig, 3 dargestellte Satz von Luftbeenflussungsscheiben in Explosionsansicht.

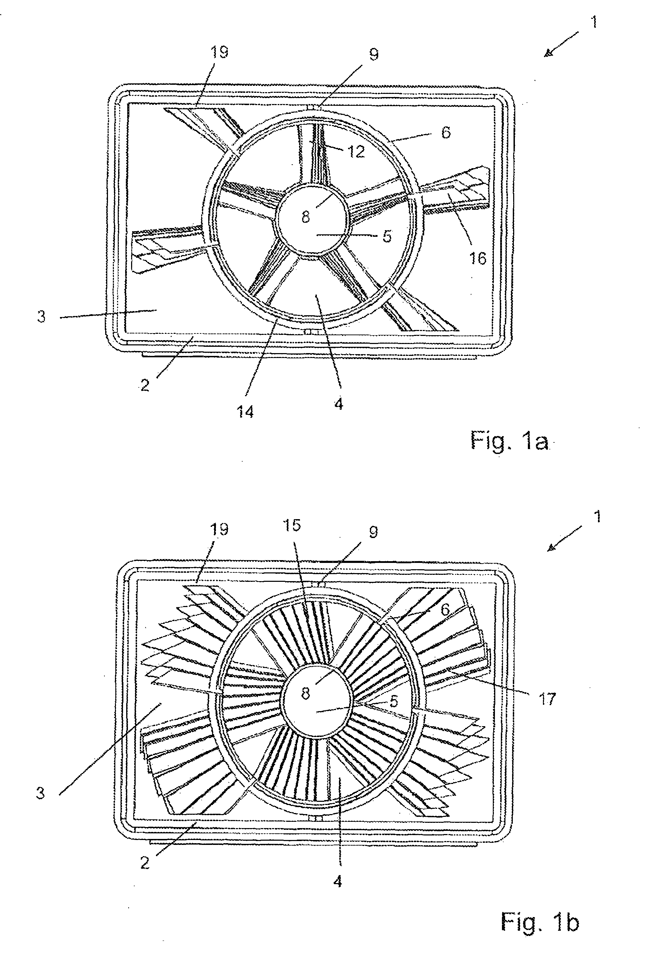

In den beiden Zeichnungen der Fig. 1 ist jeweils eine Komfort-Luftausströmerdüse 1 jeweils in unterschiedlichen Stellungen in schematischer Draufsicht dargestellt Dabei entspricht die in Fig. 1a dargestellte Stellung der Komfort-Luftausstromerdüse 1 einer Betriebsstellung, in der von der Komfort-Luftausströmerdüse 1 ein gerichteter Luftstrahl gegeben wird (sogenannter Spot-Ausströmbetrieb). In Fig. 1b ist dagegen eine Betriebsstellung der Komfort-Luftausströmerdüse 1 gezeigt, in der die Komfort-Luftausströmerdüse 1 eine diffuse Luftströmung freisetzt.

Die Komfort-Luftausströmerdüse 1 ist typischerweise im Bereich des Armaturenbretts eines Kraftfahrzeugs eingebaut. In aller Regel dient die Komfort-Luftausströmerdüse 1 der Belüftung des Kopfbereichs bzw. des Brustbereichs der Kraftfahrzeuginsassen, insbesondere der Frontpassagiere eines Kraftfahrzeugs. Hier tritt das Problem auf, dass manche Passagiere mit einem eher gerichteten Luftstrahl "angeblasen" werden möchten, wohingegen andere Passagiere eine diffuse Luftströmung bevorzugen. Zum Teil wandeln sich diese individuellen Präferenzen auch in Abhängigkeit von den Umgebungsbedingungen. Die vorliegend vorgeschlagene Komfort-Luftausströmerdüse 1 weist dabei den großen Vorteil auf, dass diese je nach ihrer Einstellung sowohl eine gerichtete Luftströmung (Luftapot), als auch eine diffuse Luftströmung freisetzen kann. Hierdurch kann bei geringem Bauraumbedarf besonders hohen Komfortansprüchen der Kraftfahrseuginsassen genügt werden.

Ein weiteres Problem bei heutigen Kraftfahrzeugen besteht darin, dass aufgrund dei großen Anzahl zu installerender Komponenten (auch - aber nicht nur - im Bereich des Armaturenbretts) der vorhandene Bauraum moglichst effektiv genutzt weiden sollte Aufgrund der sonstigen, typischerweise im Bereich eines Armaturenbretts angeordneten Armaturen, Anzeigeinstrumente, Bedenelemente und sonstigen Komponenten sind hier untelschiedlich geformte Bauraume denkbar, die jeweils möglichst optimal ausgenutzt werden sollten Um eine individuellen Wünschen und Erfordernissen genugende Ausrüstung eines Kraftfahrzeugs zu ermoglichen haben sich in der Praxis im Wesentlichen rechteckig geformte Einbauräume durchgesetzt, in die jeweils unterschiedliche Komponenten (beispielsweise Komponenten einer Stereoanlage, eines Klimaanlagen-Bediengerats und dergleichen) eingesetzt werden können Diese rechteckige "Rasterung" der Komponenten wird zwischenzettlich auch von vielen Kraftfahrzeuginsassen als asthetisch vorteilhaft bewertet

Dementsprechend steht für den Einbau von luftfreisetzenden Bauelementen (wie beispielsweise einer Luftausstromerdüse bzw eine Komfort-Luftausstfomerdüse 1) oftmals ein im Wesentlichen rechteckig geformter Bauraum zur Verfügung Dementsprechend ist die in Fig 1 dargestellte Komfort-Luftausstromerduse 1 mit einem im Wesentlichen rechteckig geformten Außenrahmen 2 ausgebildet (die Ecken sind vorliegend abgerundet ausgeführt), sodass die Komfort-Luftausstromerduse 1 problemlos und ohne unnötigen "Verlust" an Bauraum in einem rechteckig geformten Luftabgabeschacht bzw in eine rechteckig geformte Luftfreigabeöffnung im Armaturenbrett eines Kraftfahrzeugs eingesetzt werden kann Selbstverstandlich kann die Komfort-Luftausströmerdüse 1 - je nach Bauraumvorgaben - auch an anderweitig geformte Bauraume angepasst werden (wobei vorzugsweise auch der innere Aufbau geeignet angepasst werden sollte)

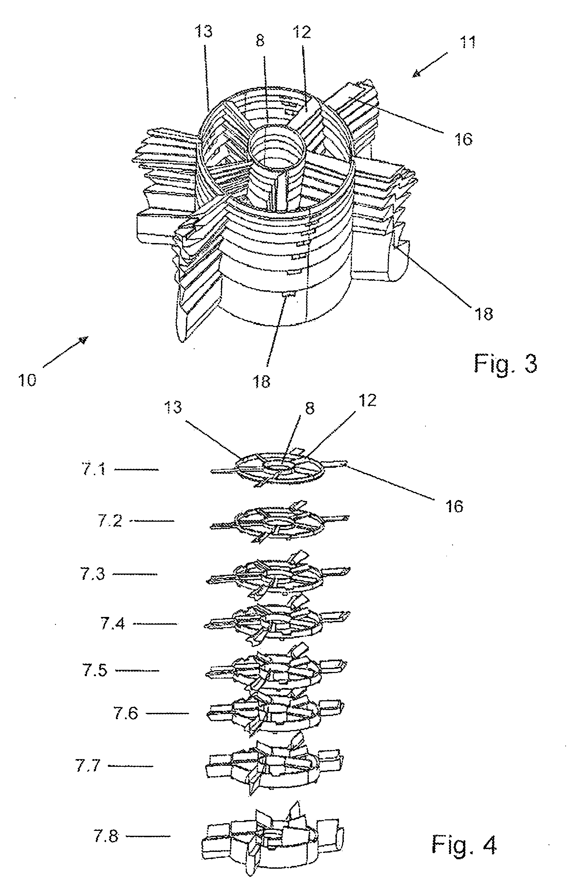

Wie man sowohl Fig. 1a, als auch Fig. 1b entnehmen kann, ist die innerhalb des Außenrahmens 2 befindliche Fläche im Wesentlichen in drei unterschiedliche Luftausströmberelche 3, 4, 5 unterteilt. Außerhalb des Drallgehäuses 6 liegt der äußere Luftausströmbereich 3, wohingegen innerhalb des Drallgehäuses 6 der mittlere Luftausströmbereich 4 angeordnet ist. In der Mitte des Dratfgehäuses 6 bilden die inneren Ringeleinente 8 der einzelnen Luftleitscheiben 7.1 bis 7.n (vorliegend 7.1 bis 7.8; vergleiche auch Fig. 3 und 4) zusätzlich (bei manchen Bauausführungen der Komfort-Luftausströmerdüse 1) einen inneren Luftausströmbereich 5. Sowohl der au-ßerhalb des Ringelementes gelesene mittlere Luftausströmbereich 4, als auch der äußere Luftaussträmbereich 3 können dabei hinsichtlich ihrer Luflausströmcharakteristik zwischen der in Fig. 1a dargestellten Betriebsstellung "Spot-Luftausströmung" und der in Fig. 1 b gezeigten Betriebsstellung "diffuse Luftausströmung" durch angulares Verdrehen der einzelnen Luftleitscheiben 7 gegeneinander verändert werden. Demgegenüber ist der innere Luftausströmbereich 5 im vorliegend dargestellten Ausführungsbeispiel der Komfort-Luftausströmerdüse 1 stets in einem "Spot-Betrieb", in dem ein gerichteter Luftstrahl ausgegeben wird, Selbstverständlich ist es möglich, den inneren Luftausströmbereich 5 mit größerem oder kleinerem Luftdurchtrittsquerschnitt zu versehen, die Öffnung des inneren Luftausströmbereichs 5 abzudeckeln (sodass hier keine Luft hindurch strömen kann) und/oder anstelle des inneren Luftausströmbererchs 5 ein Bedienelement vorzusehen, beispielsweise eine Art Knopf, mit Hilfe dessen die Luftströmung zwischen den beiden in Fig. 1a und Fig. 1b gezeigten Betriebsstellungen versteht werden kann Lediglich der Vollständigkeit halber soll darauf hingewiesen werden, dass die Komfort-Luftausströmerdüse 1 vorzugsweise auch in Zwischenstellungen gebracht werden kann, die zwischen den in Fig. 1a und Fig. 1b gezeigten "Extrempositionen" liegen.

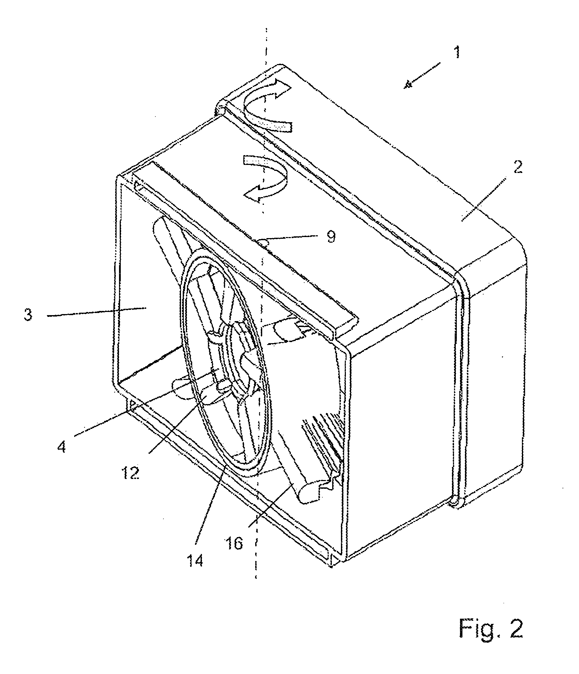

Das Drailgehäuse 6 ist in vorliegend dargestellten Ausführungsbeispiel der Komfort-Luftausströmerdüse 1 um eine vorliegend senkrecht stehende Verschwenkachse 9 herum verschwenkbar angeordnet (vergleiche insbesondere auch Fig 2) Auf diese Weise ist es möglich, dass die aus dem mittleren Luftausströmbereich 4 und/oder die aus dem inneren Luftausströmbereich 5 austretende Luftströmung in unterschiedliche Richtungen gelenkt werden kann Dabei ist darauf hinzuweisen, dass eine Verstellung des Drallgehäuses 6 ublicherweise auch einen gewissen Einfluss auf die Ausstromrichtung der aus dem äußeren Luftausströmbereich 3 austretenden Luftströmung hat Daruber hinaus ist es auch möglich dass die Verschwenkachse 9 horizontal (oder schräg) angeordnet ist Selbstverständlich ist es auch möglich, dass das Drallgehäuse 6 beispielsweise zweiachsgelagert ausgebildet wild, sodass eine "zweidimensionale" Verschwenkbewegung des Drallgehäuses 6 möglich wird, sodass der freigegebene Luftstrahl in im Wesentlichen beliebige Richtungen gelenkt werden kann.

Das eigentliche Verstellorgan 10, mit dem zwischen dem in Fig, 1a dargestellten Betriebsmodus "gerichtete Luftströmung" und dem in Fig. 1b dargestellten Betriebstmodus "diffuse Luftströmung" umgestellt werden kann besteht aus einem Stapel 11 aus vorliegend insgesamt 8 Luftleitscheiben 7.1, 7 2, . 7.8. Die einzelnen Luftleitscheiben 7 1 bis 7 8 sind dabei im Stapel 11 unmittelbar aneinander liegend angeordnet Jede der Luftleitscheiben 7 weist da bei beim vorliegenden Ausführungsbeispiel der Komfort-Luftausströmerdüse 1 im mittleren Luflausströmbereich 4 jeweils fünf innere Luftleitflügel 12 auf. die sich zwischen dem inneren Ringelement 8 und dem äußeren Ringelement 13 jeder Luftleitscheibe 7 erstrecken Die äußeren Ringelemente 13 der vordersten Luftleitscheibe 7 1 sowie der hintersten Luftleitscheibe 7 8 Sind jeweils drehbar in Fühtungsnuten von Halteelementen 14 gelagert Die Halteelemente 14 bilden somit im vorliegend dargestellten Ausführungsbeispiel gemeinsam mit den äußeren Ringelementeten 13 das Drallgehäuse 6 aus Die einzelnen Luftleitscheiben 7 1 bis 7 8 können jeweils gegeneinander angular verschwenkt werden (wobei der maximal zulässige Verschwenkungsbereich durch geeignet angeordnete Anschlageinrichtungen 18 zwischen den in Fig. 1a und Fig. 1b gezeigten Positionen begrenzt ist). Je nach Stellung der Luftleitscheiben 7 - und damit der einzelnen Luftleitflügel 12 - zueinander ergeben sich dabei unterschiedliche Betriebsmodi des Komfort-Luftausströmers 1. Sind die Luftleitflügel 12 im Wesentlichen fluchtend zueinander angeordnet (vergleiche Fig. 1a und 3), so wird die durch den äußeren Luftausströmbereich 3 sowie den mittleren Luftausströmbereich 4 durch die Komfort-Luftausströmerdüse 1 hindurch gehende Luftströmung im Wesentlichen nicht "verdrallt", sodass von der Komfort-Luftausströmerdüsen 1 eine im Wesentlichen vollständig gerichtete Luftströmung freigesetzt wird. Sind die Luftleitscheiben 7 dagegen maximal zueinander verdreht (vergleiche Fig. 1b), so bilden die Luftleitflügel 12 jeweils eine Luftleitschaufel 15 aus, mit der die durch die entsprechende Luftausströmbereiche 3, 4 hindurchgehende Luftströmung maximal "verdrillt" wird, sodass in den entsprechenden Bereichen eine diffuse Luftströmung vom Komfort-Luftsusströmer 1 freigesetzt wird.

Die vorliegend vorgeschlagene Komfort-Luftausströmerdüsen 1 ähnelt von ihrem innerhalb des Drallgehäuses 6 befindlichen Aufbau her dem in der deutschen Offenlegungsschrift DE 10 2007 013 868 A1 beschriebenen Luftausströmer mit Drallströmung und gerichteter Strömung. Der Offenbarungsgehalt dieser Anmeldeschrift wird vollumfänglich in den Offenbarungsgehalt der vorliegenden Anmeldung mit aufgenommen.

Zusätzlich weist die vorliegend vorgeschlagene Komfort-Luftausströmerdüsen 1 jedoch auch Flügelfortsätze 16 auf, die an der Außenseite der äußeren Ringelemente 13 der unterschiedlichen Luftleitscheiben 7.1 bis 7.8 angeordnet sind. Bei einer angularen Verdrehung der Luftleitscheiben 7.1 bis 7.8 gegeneinander verändern auch die Flügelfortsätze 16 ihre relative Anordnung zueinander, wobei diese (analog zu den Luftleitflügeln 12) zwischen einer im Wesentlichen zueinander fluchtenden Anordnung (Fig. 1a; wobei vom mittleren Luftausströmbereich 4 eine im Wesentlichen gerichtete Luftströmung freigesetzt wird) und einer zueinander versetztten Anordnung (Fig. 1b; bei dieser bilden die Flügelfortsätze 16 analog zum mittleren Luftausströmbereich 14 Luftleitschaufeln 17 aus, sodass auch vom äußeren Luftausströmbereich 3 eine diffuse Luftströmung freigesetzt werden kann) verstellt werden kann.

Dank der vorgeschlagenen (außen liegenden) Flügelfortsätze 16 kann somit auch der äußere Luftausströmbereich 3 zur (hinsichtlich seiner Luftausströmcharakteristik verstellbaren) Freisetzung einer Luftströmung genutzt werden. Der insgesamt zur Verfügung stehende Bauraum kann dadurch deutlich effektiver genutzt werden.

Wie man insbesondere anhand von Fig. 3 erkennen kann, ist es möglich, dass die Anschlagseinrichtungen 18, die die angulare Verstellbarkeit der einzelnen Luftleitscheiben 7.1 bis 7.8 gegeneinander begrenzen in beliebiger Weise im Bereich der Flügelfortsätze 16, der äußeren Ringelemente 13, der Luftleitflügel 12 und/oder der inneren Ringelemente 8 vorgesehen, werden.

Weiterhin ist aus den Figuren erkennbar, dass im vorliegend dargestellten Ausführungsbeispiel der Komfort-Luftausströmerdüsen 1 pro Luftleitscheibe 7 vorliegend jeweils vier Flügelfortsätze 16 vorgesehen sind. Die Anzahl der Flügelfortsätze 16 korrespondiert dabei zur Anzahl der Ecken des Außenrahmens 2. Entsprechendes gilt für die Positionierung der Flügelfortsätze 16 am äußeren Ringelement 13. Üblicherweise weisen dabei die Flügelfortsätze 16 einer "mittleren" Luftleitscheibe 7 (beispielsweise 7.4 oder 7.5) im Wesentlichen in Richtung der entsprechenden Ecke des Außenrahmens 2. Darüber hinaus ist die jeweilige Außenkante 19 der Flügelfortsätze 16 so ausgebildet, dass diese in keinem zulässigen angularen Bereich (also insbesondere weder im in Fig. 1a, noch in Fig. 1b dargestellten Betriebsmodus) mit dem Außenrahmen 2 der Komfort-Luftausströmerdüse 1 "kollidiert". Lediglich der Vollständigkeit halber sollte darauf hingewiesen werden, dass es selbstverständlich auch möglich ist, zwischen jeweils zwei Ecken des Außenrahmens 2 "zwischenflegende" Flügelfortsätze 16 (und damit "zwischenliegende" äu-ßeren Luftleitschaufeln 17) vorzusehen.

Mit anderen Worten formuliert sind die Anzahl, die Anordnung, die Größe, die Lage und die Formgebung der Flügelforsätze 16 im Bezug auf den Außenrahmen 2 angepasst. Lage, Größe, Anordnung, Anzahl und Formgebung der inneren Luftleitflügel 12 können dagegen bevorzugt auf eine möglichst effektive Luftbeeinflussung und/oder kostengünstig Ausbildung hin augepasst werden.

Lediglich der Vollständigkeit halber wird darauf hingewiesen, dass die Ausführungen insbesondere zur Lage, Anordnung, Größe, Anzahl und Formgebung der innen liegenden Luftleitflügel 12 sowie der außen liegenden Flügelfortsätze 16 auch für andere Bauausführungen von (Komfort-) Luftausströmerdüsen gelten können. Auch ist es selbstverständlich möglich, eine vom vorliegend dargestellten Ausführungsbeispiel abweichende Anzahl an Luftleitscheiben 7 zu verwenden. Im Übrigen ist es durchaus auch möglich, dass die Anzahl von Luftleitflügeln 12 und Flügelfortsätzen 16, die innerhalb einer Luftleitschaufel 15 beziehungsweise innerhalb einer äußeren Luftleitschaufel 17 angeordnet sind, voneinander abweichen, so beispielsweise einzelne Luftleitscheiben 7 (teilweise) ohne Luftleitflügel 12 bzw. ohne Flügelfortsätze 16 ausgebildet werden.

### Bezugszeichenliste

- 1.: Komfort-Luftausströmerdüse
- 2.: Außenrahmen
- 3.: Äußerer Luftausströmbereich
- 4.: Mittlerer Luftausströmbereich
- 5.: Innerer Luftausströmbereich
- 6.: Drallgehäuse
- 7.: Luftleitscheibe
- 8.: Inneres Ringelement
- 9.: Verschwenkachse
- 10.: Verstellorgan
- 11.: Stapel
- 12.: Luftleitflügel
- 13.: Äußeres Ringelement
- 14.: Halteelement
- 15.: Lüftleitschaufel
- 16.: Flügelfortsätze
- 17.: Äußere Luftleitschaufel
- 18.: Anschlageinrichtung
- 19.: Außenkanten

## Patentansprüche

1. Luftausströmvorrichtung (1) zum Ausströmen eines Luftstroms, insbesondere in einen Fahrzeuginnenraum hinein, mit zumindest einer, zumindest hinsichtlich ihrer Luftausströmcharakteristik verstellbaren ersten Luftleiteinrichtung (15), welche in zumindest einem ersten Luftdurchströmbereich (4) der Luftausströmvorrichtung (1) angeordnet ist, mit zumindest einer, zumindest hinsichtlich ihrer Luftausströmcharakteristik verstellbaren zweiten Luftleiteinrichtung (17), welche in zumindest einem zweiten Luftdurchströmbereich (3) der Luftausströmvorrichtung (1) angeordnet ist, **dadurch gekennzeichnet, dass** zumindest eine Luftleiteinrichtung (15, 17), insbesondere zumindest eine erste Luftleiteinrichtung (15), zumindest ein Luftleitelement in der Art eines Schaufelrads mit mindestens einer Schaufel (15) aufweist, wobei jede der Schaufeln (15) aus mindestens zwei axial hintereinander angeordneten Segmenten (12) gebildet ist, welche relativ zueinander angular verstellbar sind und zumindest eine Luftleiteinrichtung (15, 17), insbesondere zumindest eine zweite Luftleiteinrichtung (17), zumindest ein Luftleitelement in der Art zumindest eines sich nach außen erstreckenden Strahlenkranzes (17) mit mindestens einer strahlenartig nach außen gerichteten Schaufel (17) aufweist, wobei jede der Schaufeln (17) aus mindestens zwei axial hintereinander angeordneten Segmenten (16) gebildet ist, welche relativ zueinander angular verstellbar sind.

2. Luftausströmvorrichtung (1) nach Anspruch 1, **dadurch gekennzeichnet, dass** zumindest eine erste Luftleiteinrichtung (15) und/oder zumindest eine zweite Luftleiteinrichtung (17) zumindest eine Betriebsstellung mit einer gerichteten Luftausströmcharakteristik (Fig. 1a) und/oder zumindest eine Betriebsstellung mit einer diffusen Luftausströmcharakteristik (Fig. 1b) aufweist, sowie vorzugsweise Betriebsstellungen mit Zwischencharakteristiken einnehmen kann.

3. Luftausströmvorrichtung (1) nach Anspruch 1 oder 2, **dadurch gekennzeichnet, dass** zumindest eine erste Luftleiteinrichtung (15) und zumindest eine zweite Luftleiteinrichtung (17) zumindest bereichsweise und/oder zumindest teilweise integral miteinander ausgebildet sind.

4. Luftausströmvorrichtung (1) nach einem der vorangehenden Ansprüche, **dadurch gekennzeichnet, dass** zumindest eine erste Luftleiteinrichtung (15) und zumindest eine zweite Luftleiteinrichtung (17) zumindest bereichsweise und/oder zumindest teilweise miteinander gekoppelt sind, und vorzugsweise zumindest teilweise und/oder zumindest bereichsweise miteinander kraftschlüssig, formschlüssig, verschiebefest, drehfest, einteilig und/oder einstückig ausgebildet sind.

5. Luftausströmvorrichtung (1) nach einem der vorangehenden Ansprüche, **dadurch gekennzeichnet, dass** zumindest eine Luftleiteinrichtung (15, 17), insbesondere zumindest eine erste Luftleiteinrichtung (15) zumindest teilweise und/oder zumindest bereichsweise in einem radial innen liegenden Luftdurchströmbereich (4) angeordnet ist und/oder zumindest eine Luftleiteinrichtung (15, 17), insbesondere zumindest eine zweite Luftleiteinrichtung (17) zumindest teilweise und/oder zumindest bereichsweise in einem radial außen liegenden Luftdurchströmbereich (3) angeordnet ist.

6. Luftausströmvorrichtung (1) nach einem der vorangehenden Ansprüche, **dadurch gekennzeichnet, dass** zumindest ein Luftdurchströmbereich (3, 4, 5) zumindest teilweise und/oder zumindest bereichsweise eine zumindest im Wesentlichen runde, kreisrunde, ovalartige, polygonartige, viereckige, rechteckige, quadratische und/oder abgerundete Formgebung aufweist.

7. Luftausströmvorrichtung (1) nach einem der vorangehenden Ansprüche, **dadurch gekennzeichnet, dass** zumindest eine Luftleiteinrichtung (15, 17) in zumindest einer Betriebsstellung, insbesondere in einer Betriebsstellung, in der eine gerichtete Luftausströmcharakteristik (Fig. 1a) und/oder eine diffuse Luftausströmcharakteristik (Fig. 1b) gegeben ist, zumindest bereichsweise und/oder zumindest teilweise einer Formgebung zumindest eines Luftdurchströmbereich (15, 17) folgt.

8. Luftausströmvorrichtung (1) nach einem der vorangehenden Ansprüche, **dadurch gekennzeichnet, dass** zumindest eine schaufelradartig angeordnete Schaufel (15) sowie zumindest eine strahlenkranzartig angeordnete Schaufel (17) in radialer Richtung zumindest teilweise und/oder zumindest bereichsweise zumindest im Wesentlichen miteinander fluchten und/oder in radialer Richtung zumindest teilweise und/oder zumindest bereichsweise zumindest im Wesentlichen versetzt zueinander angeordnet sind.

9. Luftausströmvorrichtung (1) nach einem der vorangehenden Ansprüche, **dadurch gekennzeichnet, dass** zumindest zwei Schaufelsegmente (12, 16) zumindest einer Schaufel (15, 17), insbesondere zumindest einer schaufelradartig angeordneten Schaufel (15) zumindest bereichsweise und/oder zumindest teilweise eine zumindest im Wesentlichen gleichartige Formgebung aufweisen.

10. Luftausströmvorrichtung (1) nach einem der vorangehenden Ansprüche, **dadurch gekennzeichnet, dass** zumindest zwei Schaufelsegmente (12, 16) zumindest einer Schaufel (15, 17), insbesondere zumindest einer strahlenkranzartig angeordneten Schaufel (17) zumindest teilweise und/oder zumindest bereichsweise eine zumindest im Wesentlichen unterschiedliche Formgebung (19) aufweisen.

11. Luftausströmvorrichtung (1) nach einem der vorangehenden Ansprüche, **dadurch gekennzeichnet, dass** zumindest eine Luftleiteinrichtung (15, 17), insbesondere zumindest eine erste Luftleiteinrichtung (15), beweglich angeordnet ist (9) und/oder zumindest eine Luftleiteinrichtung (15, 17), insbesondere zumindest eine zweite Luftleiteinrichtung (17), starr angeordnet ist.

12. Luftausströmvorrichtung (1) nach einem der vorangehenden Ansprüche, **dadurch gekennzeichnet, dass** die Luftausströmvorrichtung (1) zumindest eine Luftdurchtrittsveränderungsvorrichtung, insbesondere zumindest eine Luftabsperrvorrichtung, aufweist.

13. Luftausströmvorrichtung (1) nach einem der vorangehenden Ansprüche, **dadurch gekennzeichnet, dass** zumindest eine Luftdurchtrittsveränderungsvorrichtung und zumindest eine Luftleiteinrichtung zumindest teilweise und/oder zumindest bereichsweise über zumindest ein gemeinsames Bedienelement verstellt werden können.

## Claims

1. An air discharging device (1) for discharging an air stream, particularly into a vehicle interior, with at least one first air conducting device (15), which is adjustable at least with respect to its air discharging characteristics and which is disposed in at least one first air through-flow region (4) of the air discharging device (1), with at least one second air conducting device (17), which is adjustable at least with respect to its air discharging characteristics and which is disposed in at least one second air through-flow region (3) of the air discharging device (1), **characterized in that** at least one air conducting device (15, 17), particularly at least one first air conducting device (15), has at least one air guiding element in the nature of a vane wheel with at least one vane (15), whereby each vane (15) is formed by at least two segments (12) which are disposed axially behind one another and which can be adjusted in an angular manner relative to one another, and at least one air conducting device (15, 17), particularly at least one second air conducting device (17), has at least one air guiding element in the nature of at least one outwardly extending ring of rays (17) with at least one ray-like outwardly directed vane (17), whereby each vane (17) is formed by at least two segments (16), which are disposed axially behind one another and which can be adjusted in an angular manner relative to one another.

2. The air discharging device (1) according to claim 1, **characterized in that** at least one first air conducting device (15) and/or at least one second air conducting device (17) has at least one operating position with directed air discharging characteristics (FIG. 1a) and/or at least one operating position with diffuse air discharging characteristic (FIG. 1b), and preferably can assume operating positions with intermediate characteristics.

3. The air discharging device (1) according to claim 1 or 2, **characterized in that** at least one first air conducting device (15) and at least one second air conducting device (17) are designed integral with one another at least in sections and/or at least partially.

4. The air discharging device (1) according to any one of the preceding claims, **characterized in that** at least one first air conducting device (15) and at least one second air conducting device (17) are coupled together at least in sections and/or at least partially, and preferably are designed at least partially and/or at least in sections force fittingly or form fittingly with one another, non-displaceable, rotationally fixed, integrally, and/or as a single piece.

5. The air discharging device (1) according to any one of the preceding claims, **characterized in that** at least one air conducting device (15, 17), particularly at least one first air conducting device (15), is disposed at least partially and/or at least in sections in a radially inner air through-flow region (4) and/or at least one air conducting device (15, 17), particularly at least one second air conducting device (17), is disposed at least partially and/or at least in sections in a radially outer air through-flow region (3).

6. The air discharging device (1) according to any one of the preceding claims, **characterized in that** at least one air through-flow region (3, 4, 5) has at least partially and/or at least in sections an at least substantially round, circular, oval, polygonal, quadrangular, rectangular, square, and/or rounded shape.

7. The air discharging device (1) according to any one of the preceding claims, **characterized in that** at least one air conducting device (15, 17) in at least one operating position, particularly in an operating position in which there are directed air discharging characteristics (FIG. 1a) and/or diffuse air discharging characteristics (FIG. 1b), at least in sections and/or at least partially follows a shape of at least one air through-flow region (15, 17).

8. The air discharging device (1) according to any one of the preceding claims, **characterized in that** at least one vane (15), disposed like a vane wheel, and at least one vane (17), disposed like a ring of rays, align at least substantially with one another in the radial direction at least partially and/or at least in sections and/or are disposed at least substantially offset to one another in the radial direction at least partially and/or at least in sections.

9. The air discharging device (1) according to any one of the preceding claims, **characterized in that** at least two vane segments (12, 16) of at least one vane (15, 17), in particular at least one vane (15) disposed like a vane wheel, have at least in sections and/or at least partially an at least substantially similar shape.

10. The air discharging device (1) according to any one of the preceding claims, **characterized in that** at least two vane segments (12, 16) of at least one vane (15, 17), particularly at least one vane (17) disposed like a ring of rays, have at least partially and/or at least in sections an at least substantially different shape (19).

11. The air discharging device (1) according to any one of the preceding claims, **characterized in that** at least one air conducting device (15, 17), particularly at least one first air conducting device (15), is disposed movably (9) and/or at least one air conducting device (15, 17), particularly at least one second air conducting device (17), is disposed rigidly.

12. The air discharging device (1) according to any one of the preceding claims, **characterized in that** the air discharging device (1) has at least one air passage changing device, particularly at least one air shutoff device.

13. The air discharging device (1) according to any one of the preceding claims, **characterized in that** at least one air passage changing device and at least one air conducting device can be adjusted at least partially and/or at least in sections by at least one mutual control element.

## Revendications

1. Dispositif de diffusion d'air (1) servant à la diffusion d'un flux d'air, en particulier à l'intérieur de l'habitacle d'un véhicule, comprenant au moins un premier dispositif déflecteur d'air (15) réglable au moins concernant sa caractéristique de diffusion de l'air, lequel dispositif déflecteur d'air est disposé dans au moins une première zone de passage d'air (4) du dispositif de diffusion d'air (1), comprenant au moins un deuxième dispositif déflecteur d'air (17) réglable concernant au moins sa caractéristique de diffusion de l'air, lequel dispositif déflecteur d'air est disposé dans au moins une deuxième zone de passage d'air (3) du dispositif de diffusion d'air (1), **caractérisé en ce qu'**au moins un dispositif déflecteur d'air (15, 17), en particulier au moins un premier dispositif déflecteur d'air (15), présente au moins un élément déflecteur d'air conçu comme une roue à palettes et comprenant au moins une palette (15), où chacune des palettes (15) est formée par au moins deux segments (12) placés l'un derrière l'autre dans le sens axial, segments qui sont réglables de façon angulaire, l'un par rapport à l'autre, et au moins un dispositif déflecteur d'air (15, 17), en particulier au moins un deuxième dispositif déflecteur d'air (17), présente au moins un élément déflecteur d'air conçu comme au moins une couronne de jets d'air (17) s'étendant vers l'extérieur, ledit élément déflecteur d'air comprenant au moins une palette (17) dirigée vers l'extérieur, comme un jet d'air, où chacune des palettes (17) est formée par au moins deux segments (16) disposés l'un derrière l'autre dans le sens axial, segments qui sont réglables de façon angulaire l'un par rapport à l'autre.

2. Dispositif de diffusion d'air (1) selon la revendication 1, **caractérisé en ce qu'**au moins un premier dispositif déflecteur d'air (15) et/ou au moins un deuxième dispositif déflecteur d'air (17) présente au moins une position de fonctionnement ayant une caractéristique de diffusion d'air à jet dirigé (figure 1a) et/ou au moins une position de fonctionnement ayant une caractéristique de diffusion d'air à jet diffus (figure 1b), de même que ledit premier et/ou deuxième dispositif déflecteur d'air peut prendre, de préférence, des positions de fonctionnement ayant des caractéristiques intermédiaires.

3. Dispositif de diffusion d'air (1) selon la revendication 1 ou 2, **caractérisé en ce qu'**au moins un premier dispositif déflecteur d'air (15) et au moins un deuxième dispositif déflecteur d'air (17) sont configurés en étant solidaires l'un de l'autre au moins par zones et/ou au moins partiellement.

4. Dispositif de diffusion d'air (1) selon l'une quelconque des revendications précédentes, **caractérisé en ce qu'**au moins un premier dispositif déflecteur d'air (15) et au moins un deuxième dispositif déflecteur d'air (17) sont couplés l'un à l'autre au moins par zones et/ou au moins partiellement et, de préférence, sont conçus, au moins partiellement et/ou au moins par zones, en étant adaptés l'un à l'autre par action de force, par complémentarité de forme, en étant solidaires en déplacement, solidaires en rotation, monoblocs, et/ou en formant une seule et même pièce.

5. Dispositif de diffusion d'air (1) selon l'une quelconque des revendications précédentes, **caractérisé en ce qu'**au moins un dispositif déflecteur d'air (15, 17), en particulier au moins un premier dispositif déflecteur d'air (15), est disposé au moins partiellement et/ou au moins par zones dans une zone de passage d'air (4) se trouvant à l'intérieur dans le sens radial, et/ou au moins un dispositif déflecteur d'air (15, 17), en particulier au moins un deuxième dispositif déflecteur d'air (17), est disposé au moins partiellement et/ou au moins par zones dans une zone de passage d'air (3) se trouvant à l'extérieur dans le sens radial.

6. Dispositif de diffusion d'air (1) selon l'une quelconque des revendications précédentes, **caractérisé en ce qu'**au moins une zone de passage d'air (3, 4, 5) présente, au moins partiellement et/ou au moins par zones, un contour au moins sensiblement rond, circulaire, ovale, de forme polygonale, carrée, rectangulaire, quadratique et/ou arrondie.

7. Dispositif de diffusion d'air (1) selon l'une quelconque des revendications précédentes, **caractérisé en ce qu'**au moins un dispositif déflecteur d'air (15, 17), dans au moins une position de fonctionnement, en particulier dans une position de fonctionnement dans laquelle est donnée une caractéristique de diffusion d'air à jet dirigé (figure 1a) et/ou est donnée une caractéristique de diffusion d'air à jet diffus (figure 1b), suit, au moins par zones et/ou au moins partiellement, un contour d'au moins une zone de passage d'air (15, 17).

8. Dispositif de diffusion d'air (1) selon l'une quelconque des revendications précédentes, **caractérisé en ce qu'**au moins une palette (15) disposée comme une roue à palettes ainsi qu'au moins une palette (17) disposée comme une couronne de jets d'air sont au moins pratiquement alignées l'une par rapport à l'autre dans le sens radial, au moins partiellement et/ou au moins par zones, et/ou sont disposées au moins sensiblement de façon décalée dans le sens radial, au moins partiellement et/ou au moins par zones.

9. Dispositif de diffusion d'air (1) selon l'une quelconque des revendications précédentes, **caractérisé en ce qu'**au moins deux segments de palette (12, 16) d'au moins une palette (15, 17), en particulier d'au moins une palette (15) disposée comme une roue à palettes, présentent, au moins par zones et/ou au moins partiellement, un contour au moins sensiblement similaire.

10. Dispositif de diffusion d'air (1) selon l'une quelconque des revendications précédentes, **caractérisé en ce qu'**au moins deux segments de palette (12, 16) d'au moins une palette (15, 17), en particulier d'au moins une palette (17) disposée comme une couronne de jets d'air, présentent, au moins partiellement et/ou au moins par zones, un contour (19) au moins sensiblement différent.

11. Dispositif de diffusion d'air (1) selon l'une quelconque des revendications précédentes, **caractérisé en ce qu'**au moins un dispositif déflecteur d'air (15, 17), en particulier au moins un premier dispositif déflecteur d'air (15), est disposé de façon mobile (9), et/ou au moins un dispositif déflecteur d'air (15, 17), en particulier au moins un deuxième dispositif déflecteur d'air (17), est disposé de façon fixe.

12. Dispositif de diffusion d'air (1) selon l'une quelconque des revendications précédentes, **caractérisé en ce que** le dispositif de diffusion d'air (1) présente au moins un dispositif de modification de passage de l'air, en particulier au moins un dispositif de fermeture du passage d'air.

13. Dispositif de diffusion d'air (1) selon l'une quelconque des revendications précédentes, **caractérisé en ce qu'**au moins un dispositif de modification de passage de l'air et au moins un dispositif déflecteur d'air peuvent être réglés, au moins partiellement et/ou au moins par zones, par au moins un élément de commande commun.
